# EUROPÄISCHE PATENTANMELDUNG

(11) **EP 1 079 208 A2**
(43) Veröffentlichungstag der Anmeldung: **28.02.2001**
(21) Anmeldenummer: 00118492.8
(22) Anmeldetag: 25.08.2000
(51) Int. Cl.: G01D 7/02

(54) **Vorrichtung und Verfahren zur Anzeige von Signalwerten**

(30) Priorität: 26.08.1999 DE 19940434
(71) Anmelder: WAVETEK GMBH, 85737 Ismaning (DE)
(72) Erfinder: Klenner, Günther, 83022 Rosenheim (DE)
(74) Vertreter: Neumeister, Kurt Gustav

(57) **Zusammenfassung**

Vorrichtung und Verfahren zur Anzeige von Signalwerten, mit einem Anzeigefeld (1), welches einen Bereich aufweist, in dem ein aktueller Signalwert (2) graphisch dargestellt ist, wobei zur Vereinfachung des Ablesens von mehreren Signalparametern durch den Benutzer in dem Anzeigefeld (1) gleichzeitig mit der Anzeige des aktuellen Signalwertes (2) zumindest ein weiterer Signalparameter (3-7) graphisch dargestellt wird. Bei den weiteren Signalparametern handelt es sich beispielsweise um einen Durchschnittswert (3), einen Minimalwert (4), einen Maximalwert (5), einen unteren Grenzwert (6) und/oder einen oberen Grenzwert (7).

## Beschreibung

Die vorliegende Erfindung betrifft eine Vorrichtung sowie ein Verfahren zur Anzeige von Signal- oder Meßwerten nach dem Oberbegriffvon Anspruch 1 bzw. Anspruch 8.

Eine derartige Vorrichtung bzw. ein derartiges Verfahren zur Anzeige von Signalwerten kommt beispielsweise in Testgeräten zur Anwendung. Als Testgerät kommen hierbei insbesondere auch Testgeräte zum Testen und/oder zur Abstimmung von Mobilfunktelefonen in Betracht.

In herkömmlichen Anzeigevorrichtungen werden die verschiedenen Signalparameter einer Messung üblicherweise wechselweise einzeln in Form einer numerischen oder graphischen Anzeige dargestellt. Es ist aber auch bekannt, mehrere Signalparameter zur gleichen Zeit mittels numerischer Anzeigen darzustellen.

Diese bekannten Anzeigevorrichtungen haben den Nachteil, daß sie im letztgenannten Fall eine große Anzeigefläche für die mehreren numerischen Anzeigefelder benötigen. Außerdem lassen sich sowohl bei der gleichzeitigen Darstellung mehrere numerischer Anzeigefelder als auch bei der sequentiellen Anzeige der mehreren Signalparameter in einem Anzeigefeld für den Benutzer die Zusammenhänge zwischen den Signalparametern nur schwer erfassen. Dies führt zu einer langsameren Ablesegeschwindigkeit der Signalparameter und beispielsweise bei der Anwendung in einem Testgerät zur Abstimmung von Mobilfunktelefonen zu einer schwierigeren und langwierigeren Abstimmung bzw. Justierung verschiedener Parameter der Mobilfunktelefone.

Es ist deshalb eine Aufgabe der vorliegenden Erfindung, eine Vorrichtung und ein Verfahren zur Anzeige von Signal- oder Meßwerten bereitzustellen, die ein wesentlich einfacheres und intuitiveres Ablesen von mehreren Signalparametern durch den Benutzer ermöglichen.

Diese Aufgabe wird bei einer Vorrichtung und einem Verfahren der eingangs genannten Art durch die im kennzeichnenden Teil des Patentanspruchs 1 bzw. 8 offenbarten Merkmale gelöst.

Die graphische Darstellung von zumindest einem weiteren Signalparameter gleichzeitig mit der graphischen Darstellung des aktuellen Signalwertes in demselben Anzeigefeld erlaubt es dem Benutzer, einerseits die Signalparameter gleichzeitig mit dem aktuellen Signalwert abzulesen und andererseits aufgrund der graphischen Darstellung aller Signalparameter die Zusammenhänge zwischen den einzelnen Signalparametern leichter und schneller zu erfassen.

Bei den weiteren Signalparametern, die gleichzeitig mit dem aktuellen Signalwert graphisch dargestellt werden, handelt es sich zum Beispiel um einen Durchschnittswert, einen Minimalwert, einen Maximalwert, einen unteren Grenzwert und/oder einen oberen Grenzwert.

Vorzugsweise ist in dem Anzeigefeld weiter ein Indikatorfeld vorgesehen, in dem eine Unterschreitung des unteren Grenzwertes und/oder eine Überschreitung des oberen Grenzwertes durch den aktuellen Signalwert angezeigt wird. Besonders vorteilhaft ist der Einsatz eines ersten und eines zweiten Indikatorfeldes zur Anzeige der Unterschreitung des unteren Grenzwertes bzw. der Überschreitung des oberen Grenzwertes durch den aktuellen Signalwert.

Weiter erfolgt die graphische Darstellung des aktuellen Signalwertes und der weiteren Signalparameter vorzugsweise in Form einer Balkenanzeige oder in Form eines Liniendiagramms, welche eine besonders vorteilhafte Darstellungsform zum Ablesen der Signalparameter bieten.

Weiter ist bevorzugt, daß der Bereich des Anzeigefelds, in welchem der aktueller Signalwert dargestellt wird, den aktuellen Signalwert zwischen dem unteren und oberen Grenzwert darstellt, wobei der Anzeigebereich für den unteren und oberen Grenzwert sich an den Bereich anschließen, und wobei sich die Indikatorfelder zur Anzeige einer Unterschreitung oder Überschreitung des unteren oder oberen Grenzwertes durch den aktuellen Signalwert sich an die unteren und oberen Grenzwerte anschließen. Dadurch ergibt sich eine intuitiv und leicht erfaßbare Darstellung der Anzeige.

Vorteilhafterweise ist dabei der Bereich rechteckig, wobei der untere und obere Grenzwert an einer Kante des Bereichs als Balken angezeigt werden, und zwischen dem Bereich und den Indikatorfeldern angeordnet sind.

Zusätzliche vorteilhafte Ausgestaltungen und Weiterbildungen der vorliegenden Erfindung sind Gegenstand weiterer Unteransprüche.

Die Erfindung, sowie weitere Ziele, Merkmale, Vorteile und Anwendungsmöglichkeiten wird bzw. werden nachfolgend anhand der beigefügten Zeichnungen näher erläutert. Dabei bilden alle beschriebenen und/oder bildlich dargestellten Merkmale für sich oder in beliebiger sinnvoller Kombination den Gegenstand der vorliegenden Erfindung, und zwar unabhängig von ihrer Zusammenfassung in den Patentansprüchen oder deren Rückbeziehung. In den Zeichnungen zeigen:
- Fig. 1: eine schematische Darstellung eines ersten Ausführungsbeispiels eines Anzeigefeldes gemäß der vorliegenden Erfindung;
- Fig. 2: eine schematische Darstellung des Anzeigefeldes von Fig. 1 für den Fall, daß der aktuelle Signalwert den unteren Grenzwert unterschritten hatte; und
- Fig. 3: eine schematische Darstellung eines zweiten Ausführungsbeispiels eines Anzeigefeldes gemäß der vorliegenden Erfindung.

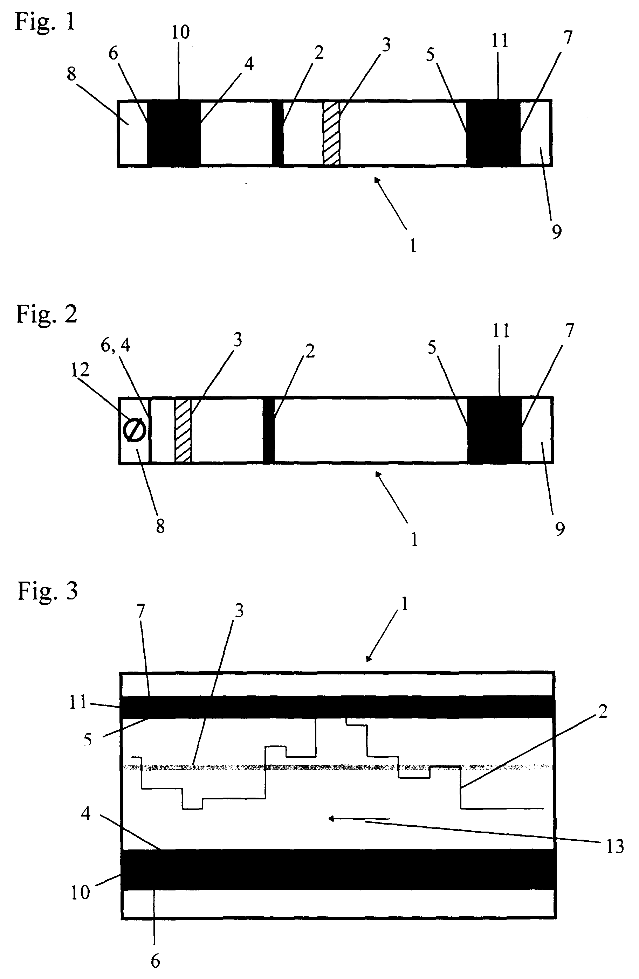

In Fig. 1 ist ein erstes Ausführungsbeispiel eines Anzeigefeldes gemäß der vorliegenden Erfindung schematisch dargestellt. In diesem ersten Ausführungsbeispiel werden die Signalparameter bzw. Signalwerte in dem Anzeigefeld 1 in Form einer Balkenanzeige dargestellt.

Die Vorrichtung ist beispielsweise eine LCD-Anzeige und das Anzeigefeld 1 hat im wesentlichen die Form eines länglichen Rechtecks. Der aktuelle Signalwert 2 und die weiteren Signalparameter 3-7 werden gleichzeitig durch verschiedene Balken, die nebeneinander in dem Anzeigefeld 1 zu sehen sind, dargestellt. In dem Anzeigefeld 1 von Fig. 1 sind gleichzeitig der aktuelle Signalwert 2, der momentane Durchschnittswert 3, sowie der Minimalwert 4 und der Maximalwert 5 der Messung dargestellt. Weiter sind in dem Anzeigefeld 1 ein unterer Grenzwert 6 und ein oberer Grenzwert 7, die auch als Bewertungsschwellen bezeichnet werden, zu sehen.

Selbstverständlich können auch noch weitere Signalparameter, die für den Benutzer bei einer Messung von Interesse sein können, angezeigt werden. Besonders vorteilhaft ist die Ausgestaltung einer Anzeigevorrichtung, bei welcher der Benutzer zu Beginn der Messung die Signalparameter auswählt, die er gleichzeitig in dem Anzeigefeld 1 angezeigt bekommen möchte. Die Auswahl kann durch eine geeignete Eingabevorrichtung, wie einer Tastatur, einer Maus, einem Touchscreen oder dergleichen erfolgen.

Die Darstellung der verschiedenen Signalparameter 2-7 kann sowohl zweifarbig als auch mehrfarbig erfolgen, wobei im Falle der zweifarbigen Darstellung der Durchschnittswert 3 beispielsweise heller als der aktuelle Signalwert 2 dargestellt ist. In den Fig. 1 bis 3 sind ausschließlich zweifarbige Anzeigefelder 1 gezeigt.

Die Signalparameter 2-7 sind im Anzeigefeld 1 von Fig. 1 durch senkrechte dunkle Balken auf einem hellen Hintergrund dargestellt. Die Zwischenräume 10, 11 zwischen den Grenzwerten 6, 7 und dem Minimalwert 4 und dem Maximalwert 5 sind im vorliegenden Ausführungsbeispiel ebenfalls dunkel dargestellt. Zudem entspricht die Breite der Zwischenräume 10, 11 sozusagen einem "Spielraum" bis zur Grenzwertüberschreitung, was insbesondere bei der Durchführung eines Abgleichs von Bauteilen (Einstellen des Arbeitspunktes eines Transistors, Verbiegen einer Luftspule u.s.w.), wie es beim Service eines Mobiltelefons auftritt, vorteilhaft ist. Dies bewirkt eine bessere Übersichtlichkeit der Darstellung im Gegensatz zu einer Ausführungsform, bei der jeweils zwei Balken dargestellt werden, die zumeist nahe beieinander liegen. Bei der in Fig. 1 gewählten Darstellungsform lassen sich der Minimalwert 4 als rechte Kante des dunklen Feldes 10 und der untere Grenzwert 6 als linke Kante des dunklen Feldes 10 ablesen.

Weiter sind in dem Anzeigefeld 1 von Fig. 1 links neben dem unteren Grenzwert 6 ein erstes Indikatorfeld 8 und rechts neben dem oberen Grenzwert 7 ein zweites Indikatorfeld 9 vorgesehen. In diesen Indikatorfeldern 8, 9 wird angezeigt, daß der aktuelle Signalwert 2 zu einem früheren Zeitpunkt bereits den unteren Grenzwert 6 unterschritten bzw. den oberen Grenzwert 7 überschritten hat. Anstelle von zwei Indikatorfeldern 8, 9 ist es ebenso möglich nur ein Indikatorfeld im Anzeigefeld 1 vorzusehen, das anzeigt, daß der Signalwert 2 den erlaubten Wertebereich 6, 7 verlassen hat.

In den Indikatorfeldern 8, 9 wird ein Verlassen des erlaubten Wertebereiches beispielsweise durch eine andersfarbige Darstellung des Indikatorfeldes, durch ein blinkendes Symbol im Indikatorfeld oder durch eine besondere Darstellung 12 im Indikatorfeld angezeigt. Selbstverständlich sind auch beliebige weitere Anzeigemöglichkeiten denkbar, welche die Aufmerksamkeit des Benutzers erregen können. Die Anzeige 12 in den Indikatorfeldern 8, 9 kann automatisch nach Ablauf einer vorgegebenen Zeitdauer oder nach Eingabe eines Benutzerbefehls beendet werden, um zu einem späteren Zeitpunkt ein nochmaliges Unter- oder Überschreiten der Grenzwerte 6, 7 anzeigen zu können.

In Fig. 2 ist nun das Anzeigefeld von Fig. 1 für den Fall gezeigt, daß der Signalwert 2 zu einem früheren Zeitpunkt den unteren Grenzwert 6 bereits einmal unterschritten hat.

Da der aktuelle Signalwert 2 im Laufe der Messung bereits einmal den unteren Grenzwert 6 unterschritten hat, fällt der Minimalwert 4 der Messung logischerweise mit dem unteren Grenzwert 6 zusammen. In dem neben dem unteren Grenzwert 6 angeordneten Indikatorfeld 8 ist ein spezielles Zeichen 12 dargestellt, das dem Benutzer anzeigt, daß der aktuelle Signalwert 2 vor kurzem den unteren Grenzwert 6 unterschritten hat. Anstelle des in Fig. 2 dargestellten Zeichens 12 sind ebenso beliebige andere Zeichen, blinkende Zeichen, ein Farbwechsel des Indikatorfeldes 8, ein blinkendes Indikatorfeld 8, usw. möglich.

Durch Drücken einer speziellen (nicht dargestellten) Taste oder Schalter der Anzeigevorrichtung oder auch nach einer vorgegebenen Zeitdauer wird das Zeichen 12 im Indikatorfeld 8 automatisch nicht mehr angezeigt, d.h. gelöscht. Auf diese Weise ist es möglich, auch zu einem späteren Zeitpunkt den Benutzer nochmals darauf aufmerksam zu machen, daß der aktuelle Signalwert 2 den unteren Grenzwert 6 nochmals vor kurzem unterschritten hat.

Anhand von Fig. 3 wird nun ein zweites Ausführungsbeispiel eines Anzeigefeldes gemäß der vorliegenden Erfindung beschrieben.

In dem Anzeigefeld 1 des zweiten Ausführungsbeispiels werden die Signalparameter 2-7 in Form eines Liniendiagramms dargestellt. Neben der oben beschriebenen Balkenanzeige stellt dies für den Benutzer die zweckmäßigste Darstellungsart dar. Im Rahmen der vorliegenden Erfindung sind aber auch noch andere Darstellungsmöglichkeiten denkbar und für den Fachmann ohne weiteres auffindbar. Insbesondere entspricht die Darstellung der Fig. 3 einer Vertauschung der Horizontalen und der Vertikalen.

In dem Liniendiagramm von Fig. 3 sind neben dem aktuellen Signalwert 2 auch der Durchschnittswert 3, der Minimalwert 4, der Maximalwert 5, ein unterer und ein oberer Grenzwert 6, 7 der Messung, sowie die Zwischenräume 10, 11 angezeigt. Es sei bemerkt, daß die Zwischenräume 10, 11 verschiedene Größe haben. Selbstverständlich können aber auch bei dieser Darstellungsform zusätzliche und/oder weitere Signalparameter graphisch dargestellt werden. Außerdem können in dem Anzeigefeld 1 auch ein oder zwei Indikatorfelder 8, 9 zur Anzeige, daß der aktuelle Signalwert den vorgesehenen Wertebereich verlassen hat, vorhanden sein.

Der aktuelle Signalwert 2 ist in dem Anzeigefeld 1 von Fig. 3 ganz links erkennbar. Die Zeitachse ist dabei durch den Pfeil 13 in Fig. 3 angedeutet. Dies bedeutet, daß der aktuellste Signalwert 2 ganz links zu sehen ist, und zusätzlich sozusagen auch die Vorgeschichte des Signalwertes 2 für den Benutzer auf rechts davon noch erkennbar ist.

Die Anzeigevorrichtungen gemäß der vorliegenden Erfindung benötigen nur relativ kleine Flächen, um eine Vielzahl an Informationen in Form von mehreren Signalparametern 2-7 gleichzeitig für den Benutzer darzustellen. Aufgrund der graphischen Darstellung aller Signalparameter in einem Anzeigefeld lassen sich, insbesondere im Vergleich zu einer numerischen Darstellung der Signalparameter, die Zusammenhänge zwischen den einzelnen Signalparametern leicht und auf den ersten Blick erfassen. Dies ermöglicht für den Benutzer ein intuitives Ablesen der aktuellen Signalsituation. Ferner kann durch die räumliche Konzentration der Darstellung eine Ermüdung der Augen aufgrund einer Suchbewegung bei herkömmlichen Anzeigefeldern vermieden werden.

Insbesondere bei dem Einsatz in Testgeräten, wie sie zum Beispiel bei der Justierung von Mobilfunktelefonen verwendet werden, ist die vorliegende Erfindung von Vorteil. Da der Benutzer die Zusammenhänge zwischen den einzelnen Signalparametern und ebenso Veränderungen und Auswirkungen auf die Signalparameter durch Verstellen von Parametern am Meßobjekt direkt erkennen kann, erlaubt das erfindungsgemäße Anzeigefeld eine direkte Rückkopplung auf Einstellungen am Meßobjekt. Hierdurch werden insbesondere auch Einstellarbeiten und Justierungen am Meßobjekt wesentlich vereinfacht und können schneller und zuverlässiger durchgeführt werden.

Die Erfindung wurde zuvor anhand von bevorzugten Ausführungsformen beschrieben. Für einen Fachmann ist es jedoch offensichtlich, daß unterschiedliche Abwandlungen und Modifikationen gemacht werden können, ohne den der Erfindung zugrundeliegenden Gedanken zu verlassen.

Zusammenfassend sieht die Erfindung insbesondere folgendes vor:
1. Vorrichtung zur Anzeige von Signalwerten mit einem Anzeigefeld (1), wobei wenigstens zwei Signalparameter (2-7) in dem Anzeigenfeld (1) graphisch dargestellt sind.
2. Vorrichtung nach Punkt 1, wobei das Anzeigenfeld (1) einen Bereich aufweist, in dem ein aktueller Signalwert (2) graphisch dargestellt ist, wobei in dem Anzeigefeld (1) gleichzeitig mit der Anzeige des aktuellen Signalwertes (2) wenigstens ein weiterer Signalparameter (3-7) dargestellt ist.
3. Vorrichtung nach Punkt 2, wobei der weitere Signalparameter (3-7) ein Durchschnittswert (3), ein Minimalwert (4), ein Maximalwert (5), ein unterer Grenzwert (6) und/oder ein oberer Grenzwert (7) ist.
4. Vorrichtung nach einem der Punkte 1 bis 3, wobei in dem Anzeigefeld (1) ein Indikatorfeld (8, 9) zur Anzeige einer Unterschreitung oder Überschreitung des unteren oder oberen Grenzwertes (6, 7) durch den aktuellen Signalwert (2) vorgesehen ist.
5. Vorrichtung nach Punkt 4, wobei das Indikatorfeld (8, 9) eine Unterschreitung oder Überschreitung des unteren oder oberen Grenzwertes (6, 7) durch den aktuellen Signalwert (2) innerhalb einer vorgebbaren Zeitspanne anzeigt.
6. Vorrichtung nach Punkt 4 oder 5, wobei in dem Anzeigefeld (1) ein erstes Indikatorfeld (8) zur Anzeige einer Unterschreitung des unteren Grenzwertes (6) durch den aktuellen Signalwert (2) und ein zweites Indikatorfeld (9) zur Anzeige einer Überschreitung des oberen Grenzwertes (7) durch den aktuellen Signalwert (2) vorgesehen ist.
7. Vorrichtung nach einem der Punkte 1 bis 6, wobei der aktuelle Signalwert (2) und/oder die weiteren Signalparameter (3-7) in Form einer Balkenanzeige oder in Form eines Liniendiagramms dargestellt sind.
8. Vorrichtung nach einem der Punkte 1 bis 7, wobei die in dem Anzeigefeld (1) anzuzeigenden Signalparameter (2-7) durch den Benutzer auswählbar sind.
9. Vorrichtung nach einem der Punkte 4 bis 8, wobei der Bereich des Anzeigefelds (1), in welchem der aktueller Signalwert (2) dargestellt wird, den aktuellen Signalwert (2) zwischen dem unteren und oberen Grenzwert (6, 7) darstellt, wobei der Anzeigebereich für den unteren und oberen Grenzwert (6, 7) sich an den Bereich anschließen, und wobei sich die Indikatorfelder (8, 9) zur Anzeige einer Unterschreitung oder Überschreitung des unteren oder oberen Grenzwertes (6, 7) durch den aktuellen Signalwert (2) sich an die unteren und oberen Grenzwerte (6, 7) anschließen.
10. Vorrichtung nach Punkt 9, wobei der Bereich rechteckig ist, wobei der untere und obere Grenzwert (6, 7) an einer Kante des Bereichs als Balken angezeigt werden, und zwischen dem Bereich und den Indikatorfeldern (8, 9) angeordnet sind.
11. Verfahren zur Anzeige von Signalwerten mit einem Anzeigefeld (1), wobei wenigstens zwei Signalparameter (2-7) in dem Anzeigenfeld (1) graphisch dargestellt werden.
12. Verfahren nach Punkt 11, wobei das Anzeigenfeld (1) einen Bereich aufweist, in dem ein aktueller Signalwert (2) graphisch dargestellt ist, wobei in dem Anzeigefeld (1) gleichzeitig mit der Anzeige des aktuellen Signalwertes (2) wenigstens ein weiterer Signalparameter (3-7) dargestellt ist.
13. Verfahren nach Punkt 12, wobei der weitere Signalparameter (3-7) ein Durchschnittswert (3), ein Minimalwert (4), ein Maximalwert (5), ein unterer Grenzwert (6) und/oder ein oberer Grenzwert (7) ist.
14. Verfahren nach einem der Punkte 11 bis 13, wobei in dem Anzeigefeld (1) eine Unterschreitung des unteren Grenzwertes (6) und/oder eine Überschreitung des oberen Grenzwertes (7) durch den aktuellen Signalwert (2) angezeigt (12) wird.
15. Verfahren nach einem der Punkte 11 bis 14, wobei die Anzeige (12) der Unterschreitung des unteren Grenzwertes und/oder der Überschreitung des oberen Grenzwertes nach einer vorbestimmten Zeitdauer automatisch gelöscht wird.
16. Verfahren nach einem der Punkte 11 bis 15, wobei die Anzeige (12) der Unterschreitung des unteren Grenzwertes und/oder der Überschreitung des oberen Grenzwertes durch den Benutzer löschbar ist.
17. Verfahren nach einem der Punkte 11 bis 16, wobei der Bereich des Anzeigefelds (1), in welchem der aktueller Signalwert (2) dargestellt wird, den aktuellen Signalwert (2) zwischen dem unteren und oberen Grenzwert (6, 7) darstellt, wobei der Anzeigebereich für den unteren und oberen Grenzwert (6, 7) sich an den Bereich anschließen, und wobei sich die Indikatorfelder (8, 9) zur Anzeige einer Unterschreitung oder Überschreitung des unteren oder oberen Grenzwertes (6, 7) durch den aktuellen Signalwert (2) sich an die unteren und oberen Grenzwerte (6, 7) anschließen.
18. Verfahren nach Punkt 17, wobei der Bereich rechteckig ist, wobei der untere und obere Grenzwert (6, 7) an einer Kante des Bereichs als Balken angezeigt werden, und zwischen dem Bereich und den Indikatorfeldern (8, 9) angeordnet sind.
19. Verfahren nach einem der Punkte 11 bis 18, wobei der aktuelle Signalwert (2) und die weiteren Signalparameter (3-7) in Form einer Balkenanzeige oder in Form eines Liniendiagramms dargestellt werden.
20. Verwendung der Vorrichtung nach einem der Punkte 1 bis 10 in einem Testgerät für Mobilfunktelefone.

## Patentansprüche

1. Vorrichtung zur Anzeige von Signalwerten mit einem Anzeigefeld (1), **dadurch gekennzeichnet**, daß wenigstens zwei Signalparameter (2-7) in dem Anzeigenfeld (1) graphisch dargestellt sind.

2. Vorrichtung nach Anspruch 1, **dadurch gekennzeichnet**, daß das Anzeigenfeld (1) einen Bereich aufweist, in dem ein aktueller Signalwert (2) graphisch dargestellt ist, wobei in dem Anzeigefeld (1) gleichzeitig mit der Anzeige des aktuellen Signalwertes (2) wenigstens ein weiterer Signalparameter (3-7) dargestellt ist, wobei vorzugsweise der weitere Signalparameter (3-7) ein Durchschnittswert (3), ein Minimalwert (4), ein Maximalwert (5), ein unterer Grenzwert (6) und/oder ein oberer Grenzwert (7) ist.

3. Vorrichtung nach einem der Ansprüche 1 oder 2, **dadurch gekennzeichnet**, daß in dem Anzeigefeld (1) ein Indikatorfeld (8, 9) zur Anzeige einer Unterschreitung oder Überschreitung des unteren oder oberen Grenzwertes (6, 7) durch den aktuellen Signalwert (2) vorgesehen ist, wobei vorzugsweise das Indikatorfeld (8, 9) eine Unterschreitung oder Überschreitung des unteren oder oberen Grenzwertes (6, 7) durch den aktuellen Signalwert (2) innerhalb einer vorgebbaren Zeitspanne anzeigt.

4. Vorrichtung nach einem der Ansprüche 1 bis 3, **dadurch gekennzeichnet**, daß in dem Anzeigefeld (1) ein erstes Indikatorfeld (8) zur Anzeige einer Unterschreitung des unteren Grenzwertes (6) durch den aktuellen Signalwert (2) und ein zweites Indikatorfeld (9) zur Anzeige einer Überschreitung des oberen Grenzwertes (7) durch den aktuellen Signalwert (2) vorgesehen ist.

5. Vorrichtung nach einem der Ansprüche 1 bis 4, **dadurch gekennzeichnet**, daß der aktuelle Signalwert (2) und/oder die weiteren Signalparameter (3-7) in Form einer Balkenanzeige oder in Form eines Liniendiagramms dargestellt sind.

6. Vorrichtung nach einem der Ansprüche 1 bis 5, **dadurch gekennzeichnet**, daß die in dem Anzeigefeld (1) anzuzeigenden Signalparameter (2-7) durch den Benutzer auswählbar sind.

7. Vorrichtung nach einem der Ansprüche 3 bis 6, **dadurch gekennzeichnet**, daß der Bereich des Anzeigefelds (1), in welchem der aktueller Signalwert (2) dargestellt wird, den aktuellen Signalwert (2) zwischen dem unteren und oberen Grenzwert (6, 7) darstellt, wobei der Anzeigebereich für den unteren und oberen Grenzwert (6, 7) sich an den Bereich anschließen, und wobei sich die Indikatorfelder (8, 9) zur Anzeige einer Unterschreitung oder Überschreitung des unteren oder oberen Grenzwertes (6, 7) durch den aktuellen Signalwert (2) sich an die unteren und oberen Grenzwerte (6, 7) anschließen, wobei vorzugsweise der Bereich rechteckig ist, und wobei vorzugsweise der untere und obere Grenzwert (6, 7) an einer Kante des Bereichs als Balken angezeigt werden, und zwischen dem Bereich und den Indikatorfeldern (8, 9) angeordnet sind.

8. Verfahren zur Anzeige von Signalwerten mit einem Anzeigefeld (1), insbesondere unter Verwendung einer Anzeigevorrichtung nach einem der Ansprüche 1 bis 7, **dadurch gekennzeichnet**, daß wenigstens zwei Signalparameter (2-7) in dem Anzeigenfeld (1) graphisch dargestellt werden.

9. Verfahren nach Anspruch 8, **dadurch gekennzeichnet**, daß die Anzeige (12) der Unterschreitung des unteren Grenzwertes und/oder der Überschreitung des oberen Grenzwertes nach einer vorbestimmten Zeitdauer automatisch gelöscht wird, oder daß die Anzeige (12) der Unterschreitung des unteren Grenzwertes und/oder der Überschreitung des oberen Grenzwertes durch den Benutzer löschbar ist.

10. Verwendung der Vorrichtung nach einem der Ansprüche 1 bis 7 oder des Verfahrens nach Anspruch 8 oder 9 in einem Testgerät für Mobilfunktelefone.
